# EUROPEAN PATENT APPLICATION

(11) **EP 2 366 532 A1**
(43) Date of publication of application: **21.09.2011**
(21) Application number: 10156982.0
(22) Date of filing: 19.03.2010
(51) Int. Cl.: B29C 67/20, B29C 44/56, B29C 44/30, B29C 44/34

(54) **Apparatus and method for production of insulating and draining boards**

(71) Applicant: Ignucell AB, 312 22 Laholm (SE)
(72) Inventor: Jalakas, Jonas, 134 60, INGARÖ (SE)
(74) Representative: Åkesson, Sten Jan-Åke

(57) **Abstract**

An apparatus for continuous production of insulating and draining boards, comprising a conveyor arrangement for conveying a mixture of beads of foamed plastic and a binder agent from an input end to an output end of the conveyor arrangement, the conveyor arrangement comprising an endless bottom conveyor belt and an endless top conveyor belt, the top conveyor belt being arranged above the bottom conveyor belt and defining therewith a conveyor path for conveying the mixture, and a drying unit for creating a drying environment, wherein the bottom conveyor belt and the top conveyor belt are arranged such that a first part of the conveyor path forms a compacting section for compacting a mixture of beads of foamed plastic and a binder agent, and wherein the drying unit is arranged to create a drying environment in a drying section of the conveyor path extending along a second part of the conveyor path arranged downstream of the first part, the drying section being arranged for drying the compacted mixture of beads of foamed plastic and binder agent.

## Description

### Field of invention

The present invention relates to an apparatus and a method for producing insulating and draining boards.

### Background of the invention

Insulating and draining boards are used in buildings to isolate for example walls and to drain away damp or moist entering the wall in the construction.

Insulating boards are usually manufactured by having a mixture comprising of foamed plastic poured onto a conveyor belt. The mixture then enters a section where it is expanded in a defined space to form an insulating board as described in US5258085.

The insulating boards manufactured in the manner described above do not, however, have draining capacity

An alternative method for the manufacture of insulating and draining boards involves providing a mixture beads of foamed plastic and a binder agent into a mould. A lid is then pressed onto the mould for compacting the mixture, which through hardening is transformed into an insulating and draining board.

In some cases the insulating and draining board may be flame retardant. The flame retardant insulating and draining board may be achieved by adding a flame retardant agent into the binder agent before compressing the molded mixture to form a board.

One problem associated with the alternative method of manufacture of the insulating and draining boards by molding is that the size of an insulating and draining board is restricted to a specific shape of a specific mould.

Further, said alternative method only allows for element by element production of said boards.

There is thus a need for an more efficient and flexible method for production of insulating and drainage boards.

### Summary of the invention

In view of the above, it is an objective of the present invention to provide an improved method and apparatus for the production of insulating and draining boards.

Further objectives involve the provision of a more flexible and effective method and apparatus for the production of insulating and draining boards.

In order to achieve at least one of these objectives, and also additional objectives which will become evident from the following description, the present invention provides an apparatus for continuous production of insulating and draining boards according to claim 1 and a method for continuous production of insulating and drainage boards according claim 13. Embodiments of the apparatus are disclosed in the dependent claims 14-16.

In particular, according to a first aspect of the invention, an apparatus for continuous production of insulating and draining boards, comprises a conveyor arrangement for conveying a mixture of beads of foamed plastic and a binder agent from an input end to an output end of said conveyor arrangement, said conveyor arrangement comprising an endless bottom conveyor belt and an endless top conveyor belt, the top conveyor belt being arranged above said bottom conveyor belt and defining therewith a conveyor path for conveying said mixture, and a drying unit for creating a drying environment, wherein the bottom conveyor belt and the top conveyor belt are arranged such that a first part of said conveyor path forms a compacting section for compacting a mixture of beads of foamed plastic and a binder agent, and wherein the drying unit is arranged to create a drying environment in a drying section of the conveyor path extending along a second part of said conveyor path arranged downstream of said first part, said drying section being arranged for drying the compacted mixture of beads of foamed plastic and binder agent.

According to this arrangement an improved apparatus for producing insulating and draining boards is achieved, having the ability to continuously produce insulating and draining boards.

The conveyor arrangement permits an adjustment of a height of the insulating and draining boards. The conveyor arrangement also permits an adjustment of a width as well as a length of the of the insulating and draining boards

By arranging a top conveyor belt and a bottom conveyor belt having a part of the top conveyor belt forming a compacting section and using the top conveyor belt and the bottom conveyor belt to maintain the compacted mixture along a conveyor path while creating a drying environment it is possible to produce insulating an draining boards continuously having an arbitrary length.

By "continuous production" should, in the context of the present application, be understood as a way of continuously producing the insulating and draining boards. It should still be considered as continuous production if the process is stopped for a moment and then take up production again. This could for example be the case when an insulating and draining board is to be cut off using a saw unit. The production of the boards may in that case be stopped while the cutting of the board is undergoing.

According to one embodiment the bottom conveyor belt and the top conveyor belt are air permeable and wherein said drying unit is arranged to supply air to the drying section through the bottom conveyor belt and the top conveyor belt.

According to another embodiment the drying unit comprises a heater for heating the air supplied to the drying section.

By arranging heaters that supplies the apparatus with air, it is possible to flow air through the compacted mixture during the production of the insulating and draining boards which results in a faster drying of the compacted mixture.

In one embodiment the top conveyor belt is movable in relation to the bottom conveyor belt for adjustment of the conveyor path height.

This movement allows an adjustment the compacting process of the insulating and draining boards

In another embodiment the top conveyor belt is arranged in parallel to the bottom conveyor belt along the second part of the conveyor path.

According to another embodiment an upstream end section of the top conveyor belt defining the first part of the conveyor path is pivotably connected to the rest of the top conveyor belt. Thereby it is possible to control the compacting process. The compacting speed could be maintained while adjusting the compacting force by elevating or lowering the pivotably connected part of the conveyor belt.

In another embodiment, the apparatus further comprises a first lateral segment and a second lateral segment which enclose the conveyor path together with the bottom conveyor belt and top conveyor belt at least along the second part of the conveyor path.

In yet another embodiment, the first lateral segment and the second lateral segment is an endless conveyor belt The lateral conveyor belts defines a width of the insulating and draining boards during production. In addition, the lateral conveyor belts together with the top and bottom conveyor belts, defines a compacting section.

According to another embodiment, the apparatus further comprises a saw unit arranged downstream of the conveyor arrangement, the saw unit is arranged to separate two adjacent sections with a cut such that a tapering recess is formed in an edge portion of a first the two sections and a tapering protrusion is formed on an edge portion of a second of the two sections.

With this arrangement it is possible to cut the boards having predetermined lengths. This arrangement also allows cutting the boards into various shapes, which boards in turn could be useful for better fitting during mounting.

According to yet another embodiment, the apparatus further comprises a roller arrangement arranged downstream of said conveyor arrangement, wherein said roller arrangement is adapted to engage with at least one surface of said compacted and dried mixture of beads of foamed plastic and binder agent.

The roller arrangement is useful to smoothen the surface of the board to achieve easier handling of the boards and to make the surface structure more resistant to wear.

In another embodiment, the apparatus further comprises a flame retardant applying arrangement arranged downstream of said conveyor arrangement for applying a flame retardant to an insulating and draining board. Flame retardant application reduces the risks of igniting the boards.

In yet another embodiment, the apparatus further comprises a dryer arranged downstream of said flame retardant applying arrangement.

According to another aspect of the invention, a method for continuous production of insulating and draining boards, comprises supplying a mixture of beads of foamed plastic and binder agent to an input end of a conveyor arrangement, compacting the received mixture in a compacting section of said conveyor arrangement while feeding the mixture towards a drying section, drying the compacted mixture in said s said drying section while feeding the compacted mixture towards an output end of said conveyor arrangement.

According to an embodiment, the method further comprises the step of separating sections from the dried, compacted mixture of beads of foamed plastics and binder agent, each section forming an insulating and draining board.

According to another embodiment, the method further comprises the step of applying a flame retardant.

According to yet another embodiment, the method further comprises the step of applying a flame retardant further comprises a step of drying.

### Brief description of the drawings

These and other aspects of the present invention will now be described in more detail, with reference to the appended drawings showing exemplary embodiments of the invention. The figures should not be considered limiting the invention to the specific embodiment; instead they are used for explaining and understanding the invention.
Figure 1 is a perspective view of an apparatus according to an embodiment of the present invention.
Figure 2 is a perspective view of a first mixing arrangement, a container and a second mixing arrangement, a conveyor path including a drying unit, a top and bottom conveyor belt according to an embodiment of the present invention.

### Detailed description

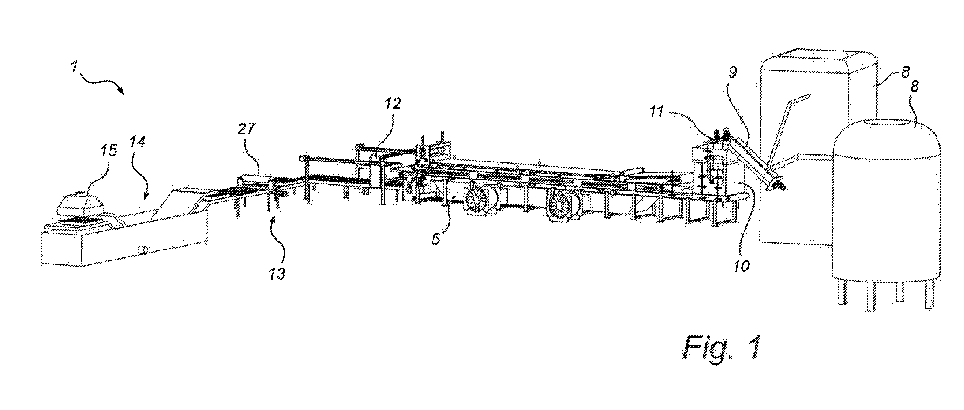

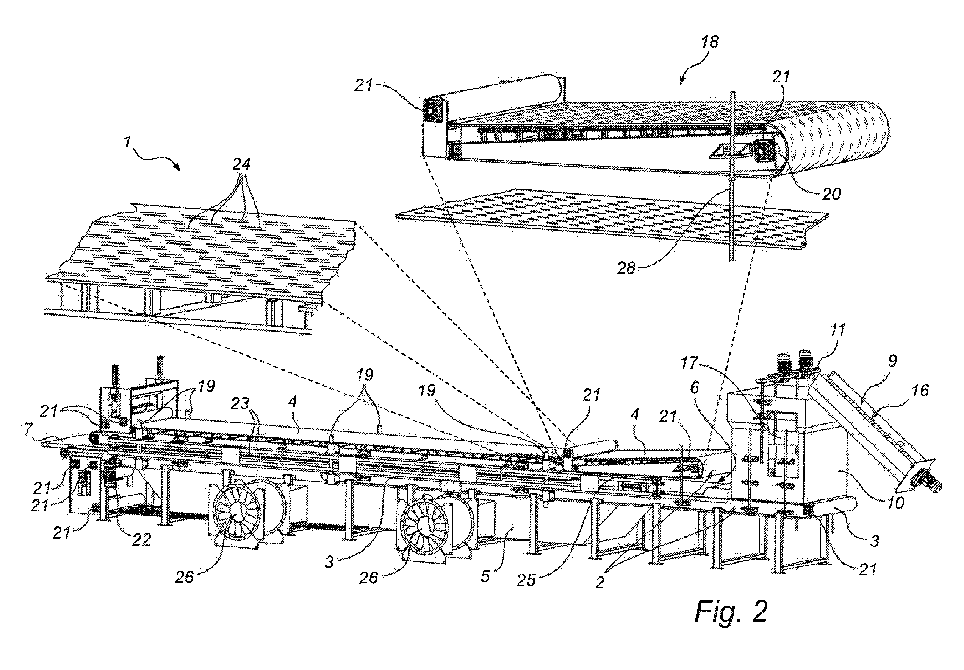

Figure 1 shows an apparatus 1 according to an embodiment of the invention, suitable for continuous production of insulating and draining boards, and figure 2 shows a section of the apparatus 1.

The inventive apparatus comprises a conveyor arrangement 2 for conveying a mixture of beads of foamed plastic and a binder agent from an input end 6 to an output end 7 of said conveyor arrangement 2.

The conveyor arrangement 2 comprises an endless bottom conveyor belt 3 and an endless top conveyor belt 4, and a drying unit 5 for creating a drying environment.

The top conveyor belt 4 is arranged above said bottom conveyor belt 3 and defining therewith a conveyor path for conveying said mixture of foamed plastic and binder agent.

The bottom conveyor belt 3 and the top conveyor belt 4 are arranged such that a first part of said conveyor path forms a compacting section for compacting said mixture.

The drying unit 5 is arranged to create a drying environment in a drying section of the conveyor path extending along a second part of said conveyor path arranged downstream of said first part, said drying section being arranged for drying the compacted mixture of beads of foamed plastic and binder agent.

The shown apparatus 1 further comprises a reservoir 8, a first mixing arrangement including a screw 9, a container 10 having an adjustable damper (not shown), a second mixing arrangement 11, a first and a second lateral conveyor belt, a saw unit 12, a roller arrangement 13, a bath 14 for flame retardant application, and an additional drying unit 15.

The reservoir 8 is arranged for supply of said beads of foamed plastics as well as said binder agent, and in the shown embodiment the reservoir 8 comprises a first vessel for said bead of foamed plastic and a second vessel for said binder agent. The beads of foamed plastic and binder agent is arranged to be supplied to the first mixing arrangement 9.

The screw of the first mixing arrangement 9 is arranged for premixing of said beads of foamed plastic and the binder agent during simultaneous transportation to the container 10.

The second mixer arrangement 11 is arranged in the container 10 and adapted to mix the premixed beads of foamed plastic and binder agent in order to form a homogenous mixture of said foamed plastic and binder agent. It is to be understood that in some embodiments, the first or the second mixing arrangement might be dispensed with.

The adjustable damper of the container 10 is arranged for controlled discharge of said mixture to the input end of said conveyor arrangement and more specifically onto the bottom conveyor belt 3.

The conveyor arrangement 2 is arranged to receive the mixture at said input end and to transport/convey the mixture along the conveyor path towards the output end 7. During the transportation, the mixture is conveyed through the first part of the conveyor path in which the endless bottom conveyor belt 3 and the endless top conveyor belt 4 defines said compacting section. The mixture is compressed during the transportation in the compacting section before entering the second part of the conveyor path.

Thereafter the mixture passes through the drying section of the conveyor path, the drying section extending along the second part of the conveyor path, and wherein the drying unit 5 is arranged for drying the compacted mixture of beads of foamed plastic and binder agent. During the compression, the drying unit 5 is in the shown embodiment used to pass air through the conveyor belts 3, 4 and the mixture.

The output end 7 of the conveyor arrangement 2 is located at the downstream end of the compacting section.

The dried and compacted beads of foamed plastic and binder agent are the fed to a saw unit 12 arranged downstream of said output end and adapted to cut the boards into a predetermined size.

The boards are subsequently smoothed using the roller arrangement unit 13 before a flame retardant is applied using a bath 14 and finally dried using a final drying unit 15. It is understood that the flame retardant might be applied in other ways, for example by means of a nozzle or spray arrangement.

Hereafter, the various parts or components of the inventive apparatus disclosed in figure 1 will be described with reference to the accompanied figure 2.

The reservoir 8, shown in figure 1, is arranged to supply material in the form of beads of foamed plastic and a binder agent. The reservoir 8 might be in the form of a tank, a storage, a cistern, a container or the like, suitable for storing material in compartments. The reservoir 8 might alternatively comprise two separate vessels, which is the case in the shown embodiment, where one vessel may be used for storing beads of foamed plastic and another vessel may be used for storing the binder agent. It should be understood that if additional materials are used, the reservoir may comprise additional vessels or compartments. In this case, each vessel or compartment further comprises means for supplying the material stored therein.

The first mixing arrangement 9 is shown in more detail in fig 2 and is arranged for receiving beads of foamed plastic and a binder agent from the reservoir 8. In the shown embodiment, the first mixing arrangement 9 comprises a screw 16 arranged to receive the beads of foamed plastic from the first vessel of the reservoir 8 and the binder agent from the second vessel of the reservoir 8. The screw is arranged to convey the beads of foamed plastic and the binder agent to the container 10 during simultaneous premixing of the beads of foamed plastic and the binder agent.

The container 10 is arranged to receive a premixture of beads of foamed plastic and binder agent from the first mixing arrangement 9 in the form of the screw 16. The second mixing arrangement 11 is arranged in the container 10, said second mixing arrangement 11 comprising at least one agitating device 17 . In the embodiment shown in fig 2, the second mixing arrangement 11 comprises two agitating devices 17 which are arranged to mix the premixture within the container 10.

The at least one agitating device 17 of the second mixing arrangement 11 might be movable to an arbitrary position within the container 10 and may also be set to operate at an optional speed.

The adjustable damper is arranged for controlling the output of the mixture from the container 10 and may comprise to this end a pivotable structure 18 forming part of the container 10 bottom.

The conveyor arrangement is shown more in detail in figure 2.

The bottom conveyor belt 3 of said conveyor arrangement 2 is arranged to receive the mixture of beads of foamed plastic and binder agent from the container 10 at an input end of said conveyor arrangement.

The bottom conveyor belt 3 is an endless conveyor belt.

A typical length of the conveying surface of the bottom conveyor belt 3 is 10-15 m, resulting in a total conveyor belt length of approximately twice that distance. It should be realized that other lengths may be used.

The top conveyor belt 4 is arranged above the bottom conveyor belt 3, wherein the top conveyor belt 4 is running essentially in parallel to the bottom conveyor belt 3 along the drying section of the conveyor path.

The distance between the top and bottom conveyor belt is adjustable, thereby making the conveyor path height adjustable in order to allow the production of insulating and draining boards of various thickness. The distance may be adjusted by means 19 for raising and lowering the top conveyor belt 4 in relation to the bottom conveyor belt 3, wherein said means 19 may be screws, pneumatic or hydraulic arrangement or the like. In the shown embodiment, said means 19 for raising and lowering the top conveyor belt 4 is in the form of screw devices distributed along the conveyor path. The means for raising and lowering could also be used to adjust the top conveyor belt 4 having an inclination in relation to the bottom conveyor belt 3.

The top conveyor belt 4 comprises an upstream end section 18 which defines said first part of the conveyor path and which is pivotably connected to the rest of the top conveyor belt. Hereby, said upstream end section might be inclined in relation to the rest of the top conveyor belt 4 in order to achieve the compacting effect of the compacting section extending along said first part of the conveyor path. The degree of inclination naturally affects the amount of compression per length unit.

The top and bottom conveyor belts are mounted in a typical way using retainer rings 20, back tension arrangements, returnway rollers and belt storages. The retainer rings 20 are used to uphold and guide the belt around a belt shafts 21.

A driving unit in the form of a motor 22 is arranged with a driving shaft which is operatively connected to one of these belt shafts 21 for the drive of the belt with a predetermined speed. The returnway rollers and belt storage is typically exceeding a few meters in length in order to reduce catenary sag of the belt. The back tension arrangement is a gravity take-up roller resting on the belt where a weight is arranged around an axis of the roller. An alternative solution for belt tension may comprise a roller having an air pressure arrangement. The endless belts are in addition be arranged with safety arrangement that stops the conveyor belts if a malfunction such as a belt break or if the belt gets stuck.

The top and bottom conveyor belts are upheld using a conveyor frame 23 for each belt, The conveyor frame 23 further comprises a belt carryway, which can be realized in several ways. A common way is to use elongated support structures extending along the conveyor path. Another solution is to use a V-shaped array, which is achieved when placing a plurality of elongated support structures in a V-shaped pattern. The belt will have support across the full width of the conveyor belt and in addition the V-shaped pattern may reduce wearing on the conveyor belt. In the present invention, the V-shape has an additional feature and that is to make sure that air can pass through the full width of the conveyor belt. This is for example not possible when using elongated support structures extending along the conveyor path since air will not be able to flow through the elongated support structure. The effect of using elongated support structures extending along the conveyor path is a width on the conveyor belt having the size of the width of the elongated support structure that will not be exposed to air flowing through the conveyor belt.

In addition to the V-shaped carryways it is possible to use edge carryways arranged on the conveyor frame to uphold the conveyor belt 3, 4 at the edges of the belt, and extending along the conveyor path. To avoid problems with air not being able to flow through that part of the belt as described previously, the edge carryways may have segments that are removed or slightly tilted in relation to the conveyor path. These segments may be distributed along each side of the conveyor path.

The conveyor belt 3, 4 may in an alternative embodiment be equipped with drivers along the conveyor belt. These drivers are usable if a specific shape on one or both edges of the insulating and draining board is desired. The drivers may also be set, such that a specific width of the board is achieved, wherein the drivers may allow for easier cutting at that specific width.

The top and bottom conveyor belts 3, 4 may be constructed in a plastic material although other materials are possible. Each conveyor belt may have openings 24 arranged in such a way to achieve a perforated belt, wherein the belts are suitable to let air flow through the belt. The lateral conveyor belts 25 may also have the same construction as the top and bottom conveyor belts 3, 4.

In addition to the top and bottom conveyor belts 3, 4, the apparatus 1 may be equipped with lateral conveyor belts 25 as well. The purpose of having lateral conveyor belts 25 may be to achieve an almost fully enclosed compacting section together with the top and bottom conveyor belt. In this way, the mixture of beads of foamed plastic and the binder agent may not escape at the lateral edges of the top and bottom conveyor belts 3, 4. The lateral conveyor belts 25 may also be used to achieve edges on the insulating and draining boards with a straight profile. The lateral conveyor belts 25 may also be of the type of endless conveyor belts that are used for the top and bottom conveyor belts 3, 4. The lateral belt 25 may further be arranged with a tension arrangement based on for example pressurized air, wherein the tension arrangement is suitable to stretch the conveyor belt 25 if expanded due to for example heat exposure.

The lateral conveyor belts 25 may be displaceable in order to adjust the width of the conveyor path and thereby adjusting the width of the insulating and draining boards produced.

The lateral conveyor belts 25 may in addition have resilient members arranged in their connection to the apparatus 1. The resilient members are suitable for moving the conveyor belt 25 in a lateral direction due to expansion of the top and bottom belts, which expansion originates from heating due to the hot air flowing through the conveyor belt.

An alternative to use the lateral conveyor belts 25 is to use a bottom conveyor belt having edge walls extending from the bottom conveyor belt 3 an up towards the top conveyor belt 4 to form a bottom conveyor belt 3 with a U-shape. The bottom belt 3 may further comprise edge walls extending across a width of the conveyor belt 3, which walls will together with the U-shaped bottom conveyor belt define a compartment having the size of the insulating and draining board to be manufactured.

The drying unit 5, which is shown in more detail in figure 2, is arranged for creating a drying environment in the second section of the conveyor path, and thus for drying the compacted mixture of beads of foamed plastic and binder agent. The drying unit 5 may comprise at least one heater for heating the air supplied to the drying section. In the shown embodiment, fans 26 are arranged for introducing air into a air chamber located below the bottom conveyor belt 3 and extending along said second part of the conveyor path. The fans create an excess pressure in the air chamber, and the air permeability of the bottom conveyor belt 3 allows the air to enter into the second part of the conveyor path constituting the drying section. The compacted mixture is thus exposed to the air, which as stated before may be heated. The air escapes from the drying section, for instance through the top conveyor belt 4, through the lateral conveyor belts 25 or through the input end 6 or the output end 7.

The speed of the fans 26 and thus the air flow may be adjusted to a predetermined value. Furthermore an exhaust unit may be arranged above the top conveyor belt, suitable for exhausting the air supplied by the fans.

The saw unit 12, shown in figure 1, is arranged at the output end 7 of the conveyor path, wherein said saw unit 12 is arranged for separating two adjacent sections of the insulating and draining boards with a cut. The saw unit 12 is movably arranged around the insulating and draining boards exiting of the apparatus 1. This arrangement allows for the saw unit 12 to follow the production speed along the conveyor path of the board while separating the adjacent sections of the board with a cut in an orthogonal direction. The saw unit 12 may in an alternative embodiment be fixedly arranged to the apparatus 1. This alternative may require intermittent forward feeding. The saw unit 12 may also be arranged with adjustable saws, such that an edge portion may be straight or in an angle. In another embodiment the saw unit may comprise two or more saws, suitable for separating the adjacent sections with a cut such that a tapering recess is formed in an edge portion of the insulating and draining board and a tapering free end is formed in the opposing edge portion of the subsequent insulating and draining board.

The roller arrangement 13 is arranged to receive the insulating and draining boards and pass them through the roller arrangement 13, which comprises heated rollers or plates. The heated rollers 27 or plates are suitable for applying heat to each insulating and draining board such that the board will begin to melt and at the same time smoothen out the board in such a way that a top and bottom surface will be smoother after passing through the heated rollers 27. An alternative to a heated roller 27 or plate is to use an ordinary roller or plate accompanied with a preheating arrangement comprising of at least one infra heater suitable for heating the insulating and draining boards before passing through the roller or plate.

The flame retardant applying arrangement for applying a flame retardant to an insulating and draining board is shown in figure 1. The flame retardant applying arrangement is in the shown embodiment a bath arrangement 14 with a flame retardant. The arrangement may further comprise means for soaking boards by for example using conveyors that are suitable for transporting or lowering boards down into the bath arrangement 14 with flame retardant and then transporting or elevating them up from the bath. Other a flame retardant applying arrangements for applying a flame retardant may be used. For example, the flame retardant applying arrangement may comprise spraying devices or spray nozzles that are arranged to spray flame retardant onto the boards.

The drying arrangement 15 is arranged downstream of the flame retardant applying arrangement. The drying arrangement 15 comprises dryers such as fans that are suitable for drying the boards being exposed to flame retardant,

The present invention will now be described in terms of production steps using the apparatus 1 arrangement according to an embodiment.

The beads of foamed plastic and binder agent are stored in one or two vessels, wherein the first mixing arrangement 9 is used to mix the beads of foamed plastic with the binder agent. Screw conveyors 16 may be used to transport the beads of foamed plastic while the binder agent is added by for example pouring the binder agent on the beads of foamed plastic being conveyed with the screw. The screw conveyor 16 speed may be adjusted to increase or decrease the flow of material from the reservoirs 8. In addition it is possible to adjust the amount of binder agent used for a certain amount of beads of foamed plastic to achieve a desired consistency. It should be realized that several other possible solutions to mix the beads of foamed plastic with the binder agent may be realized with or without the use of screw conveyors 16.

The mixture may then be transported into the container 10, wherein the container 10 is arranged with a second mixing arrangement 11 using at least one agitator 17. The agitator 17 is used to mix the premixed mixture further to adjust for an erroneous premixing procedure. The agitator 17 may be arranged into an optional position within the container 10 to improve the efficiency of the mixing in the container 10. In addition the agitator 17 speed may be adjusted to mix faster or slower in order to achieve the desired consistency within a predetermined time.

The speed of the first and second mixing arrangements 9, 11 is related to the production speed of the insulating and draining boards to be produced.

The damper arranged on the container 10 is adjustable to determine the amount of mixture that will be released from the container 10. The container 10 may act as an intermediate buffer of mixture. The mixture released from the container 10 is received by the bottom conveyor belt 3.

The bottom conveyor belt 3 then conveys the mixture further into a section for compacting the mixture. Lateral conveyor belts 25 are used to prevent the mixture from escaping from the apparatus. The compacting section is arranged with a pivotably connected part 18 of the top conveyor belt 4 as decribed previously. The elevation, which is adjusted using adjusting means 28 such as screws, is due to the pivotable connection used to determine the compacting pressure applied on the mixture of beads of foamed plastic and the binder agent. The width of the conveyor belt is typically 1200 mm although other widths may be realized. The speed of the conveyor belts may typically be in the range between 1 and 6 meters per minute.

The second part of the compacting section, which may be arranged in parallel or with an inclination, is used to maintain the compacting height of the mixture. The distance between the top and bottom conveyor belts may be adjusted using elevating and lowering means 19 such as for example screws, wherein the screws are used to achieve a predetermined height of the board to be produced. A typical height is in the range from 50 mm to 300 mm although other heights may be realized.

The top and bottom conveyor belts 3, 4 together with the lateral conveyor belts 25 are used to form a compacting section which maintains the size of the board during a drying step. The fans 26 and heaters are arranged to flow air through the conveyor belts and the board. The air dries the board and is hardening the board. An exhaust arrangement may be used above the top conveyor belt to aid the air flow through the belts and the board. A typical length of the drying unit 26 is around 8 meters, which results in that the beads of foamed plastic and binder agent is in the drying section for approximately 1-3 minutes depending on the speed of the conveyors.

The conveyor belts 3, 4, 25 will in the case they are made of for example plastic start to expand when exposed to heat. The top and bottom conveyor belts 3, 4 expands towards the lateral conveyor belts 25, wherein the lateral conveyor belts 25 are arranged with resilient members to adjust for the expansion of the top and bottom conveyor belts 3, 4. Tension arrangements are also used to maintain the conveyor belts in a stretched condition.

The dried board is hardened and at the output of the conveyor path a saw unit 12 is arranged. The saw unit 12 is arranged to follow the production speed of the boards. The saw unit 12 may cut the continuously produced board into a predetermined size. A typical length of a cut board is between 150 mm to 6000 mm.

The boards are then moved to a bath 14 or spray arrangement for applying a flame retardant on the boards. This may be achieved by either soaking the boards in the bath arrangement or spraying the boards using one or several nozzles.

After the process of applying flame retardant, the boards are dried using another drying unit 15.

The apparatus may further comprise stop functions to prevent damages, wherein the stop functions may be triggered if for example the material ends, if the humidity is too high, if the mixture begins stacking at the input of the conveyor path or if one of the conveyor belts stops.

The person skilled in the art realizes that the present invention by no means is limited to the embodiments described above. Many modifications and variations are possible within the scope of the appended claims.

## Claims

1. Apparatus (1) for continuous production of insulating and draining boards, comprising
a conveyor arrangement (2) for conveying a mixture of beads of foamed plastic and a binder agent from an input end (6) to an output end (7) of said conveyor arrangement (2),
said conveyor arrangement (2) comprising
an endless bottom conveyor belt (3) and an endless top conveyor belt (4), the top conveyor belt (4) being arranged above said bottom conveyor belt (3) and defining therewith a conveyor path for conveying said mixture, and
a drying unit (5) for creating a drying environment,
wherein the bottom conveyor belt (3) and the top conveyor belt (4) are arranged such that a first part of said conveyor path forms a compacting section for compacting a mixture of beads of foamed plastic and a binder agent, and
wherein the drying unit (6) is arranged to create a drying environment in a drying section of the conveyor path extending along a second part of said conveyor path arranged downstream of said first part, said drying section being arranged for drying the compacted mixture of beads of foamed plastic and binder agent.

2. Apparatus (1) according to claim 1, wherein said bottom conveyor belt (3) and said top conveyor belt (4) are air permeable and wherein said drying unit (5) is arranged to supply air to the drying section through said bottom conveyor belt (3) and said top conveyor belt (4).

3. Apparatus (1) according to claim 2, wherein said drying unit (5) comprises a heater for heating the air supplied to said drying section.

4. Apparatus (1) according to any one of the preceding claims, wherein said top conveyor belt (4) is movable in relation to said bottom conveyor belt (3) for adjustment of the conveyor path height.

5. Apparatus (1) according to any one of the preceding claims, wherein said top conveyor belt (4) is arranged in parallel to said bottom conveyor (3) belt along said second part of the conveyor path.

6. Apparatus (1) according to any one of the preceding claims, wherein an upstream end section of said top conveyor belt (4) defining said first part of said conveyor path is pivotably connected to the rest of said top conveyor belt (4).

7. Apparatus (1) according to any one of the preceding claims, further comprising a first lateral segment (25) and a second lateral segment (25) which enclose said conveyor path together with said bottom conveyor belt (3) and top conveyor belt (4) at least along said second part of the conveyor path.

8. Apparatus (1) according to claim 7, wherein each of said first lateral segment (25) and said second lateral segment (25) is an endless conveyor belt.

9. Apparatus (1) according to any one of the preceding claims, further comprising a saw unit (12) arranged downstream of said conveyor arrangement, said saw unit (12) is arranged to separate two adjacent sections with a cut such that a tapering recess is formed in an edge portion of a first the two sections and a tapering protrusion is formed on an edge portion of a second of the two sections.

10. Apparatus (1) according to any one of the preceding claims, further comprising a roller arrangement (13) arranged downstream of said conveyor arrangement, wherein said roller arrangement (13) is adapted to engage with at least one surface of said compacted and dried mixture of beads of foamed plastic and binder agent.

11. Apparatus (1) according to any one of the preceding claims, further comprising a flame retardant applying arrangement (14) arranged downstream of said conveyor arrangement for applying a flame retardant to an insulating and draining board.

12. Apparatus (1) according to claim 11, further comprising a dryer (15) arranged downstream of said flame retardant applying arrangement.

13. Method for continuous production of insulating and draining boards, comprising
supplying a mixture of beads of foamed plastic and binder agent to an input end (6) of a conveyor arrangement,
compacting the received mixture in a compacting section of said conveyor arrangement while feeding the mixture towards a drying section,
drying the compacted mixture in said said drying section while feeding the compacted mixture towards an output end (7) of said conveyor arrangement.

14. Method according to claim 17, further comprising the step of separating sections from the dried, compacted mixture of beads of foamed plastics and binder agent, each section forming an insulating and draining board.

15. Method according to claims 17-18, further comprising the step of applying a flame retardant.

16. Method according to claim 19, wherein the step of applying a flame retardant further comprises a step of drying.
